Europäisches Patentamt

European Patent Office

Office européen des brevets

(19)

(11) Veröffentlichungsnummer: **0 040 704**
**B1**

(12) **EUROPÄISCHE PATENTSCHRIFT**

(45) Veröffentlichungstag der Patentschrift:
22.02.84

(51) Int. Cl.³: **G 01 M 11/02, G 02 B 27/60**

(21) Anmeldenummer: **81103173.1**

(22) Anmeldetag: **28.04.81**

(54) **Verfahren zur Moiré-metrischen Prüfung.**

(30) Priorität: **24.05.80 DE 3019930**

(43) Veröffentlichungstag der Anmeldung:
**02.12.81 Patentblatt 81/48**

(45) Bekanntmachung des Hinweises auf die Patenterteilung:
**22.02.84 Patentblatt 84/8**

(84) Benannte Vertragsstaaten:
**DE FR GB**

(56) Entgegenhaltungen:
**DE - A - 2 225 242**
**GB - A - 1 276 737**
**US - A - 3 388 735**
**US - A - 3 767 308**

**APPLIED OPTICS, Band 14, Nr., 3, März 1975 NEW YORK**
**(US) Y.M. HONG: "Tilted-Reference-Beam Lateral**
**Shearing interferometer Utilizing Carrier-Frequency**
**Photography" Seite 614 bis 617**
**APPLIED OPTICS, Band 2, Nr. 7 Juli 1963 NEW YORK**
**(US) J. ZIMMERMAN: "A method for measuring the**
**distortion of photographic objectives" Seiten 759-760**
**APPLIED OPTICS, Band 12, Nr. 4, April 1973 NEW YORK**
**(US) K. MATSUMOTO et al.: "Improvement on Moiré**
**Technique for In-Plane Deformation Measurements",**
**Seiten 858-864**

(73) Patentinhaber: **IBM DEUTSCHLAND GMBH,**
**Pascalstrasse 100, D-7000 Stuttgart 80 (DE)**

(84) Benannte Vertragsstaaten: **DE**

(73) Patentinhaber: **International Business Machines**
**Corporation, Old Orchard Road, Armonk, N.Y. 10504 (US)**

(84) Benannte Vertragsstaaten: **FR GB**

(72) Erfinder: **Häusler, Gerd, Dr., Alterlanger Strasse 33,**
**D-8520 Erlangen (DE)**
Erfinder: **Järisch, Walter, Dr., Finkenweg 15,**
**D-7030 Böblingen (DE)**

(74) Vertreter: **Teufel, Fritz, Dipl.-Phys., Schönaicher**
**Strasse 220, D-7030 Böblingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Moiré-metrischen Prüfung

Die Erfindung betrifft ein Verfahren zur Moiré-metrischen Prüfung der Abbildungseigenschaften optischer Abbildungssysteme nach dem Oberbegriff von Anspruch 1.

Auf vielen Gebieten der Forschung und der Technik werden optische Abbildungssysteme eingesetzt, an die immer höhere Genauigkeitsanforderungen gestellt werden. Ein besonders wichtiges Beispiel stellen die photolithographischen Verfahren bei der Herstellung integrierter Halbleiterschaltungen dar. Das Bestreben, die Herstellungskosten derartiger Schaltungen zu senken und die Schaltgeschwindigkeit zu erhöhen, führt einerseits dazu, die Schaltkreise immer kleiner und damit deren Dichte auf dem Halbleiterplättchen immer größer zu machen und andererseits zu immer größeren Halbleiterscheiben, auf denen eine Vielzahl solcher Halbleiterplättchen (Chips) in einem Bearbeitungsgang behandelt werden können. Gegenwärtig liegen die kleinsten Schaltungsstrukturen, die mit photolithographischen Verfahren im sichtbaren Bereich des Spektrums noch erzeugt werden können, bei ungefähr 2 µm; die Halbleiterscheiben und damit das Gesichtsfeld der verwendeten optischen Abbildungssysteme haben einen Durchmesser von 10 bis 15 cm erreicht. Den hohen Anforderungen an die Genauigkeit der optischen Abbildungssysteme entsprechen noch schärfere Anforderungen an die Genauigkeit der zur Prüfung dieser Abbildungssysteme verwendeten Verfahren. Wenn Schaltkreisstrukturen mit einer minimalen Ausdehnung von 1 Mikrometer hergestellt werden sollen, ist es erforderlich, die Abbildungseigenschaften der photolithographischen Systeme auf 0,1 Mikrometer genau zu bestimmen. Die Prüfungen beziehen sich dabei auf folgende Parameter:

1) Die lokale Verzeichnung des Abbildungssystems an jedem Punkt des Gesichtsfeldes. Ist die individuelle lokale Verzeichnung jedes Abbildungssystems bekannt, so können Systeme mit gleicher oder ähnlicher lokaler Verzeichnungscharakteristik ausgesucht und in einer Herstell-Linie zusammen verwendet werden, in der mehrere Belichtungsschritte mit verschiedenen Systemen durchgeführt werden müssen. Auf diese Weise läßt sich die Gesamtausbeute, bezogen auf die ganze Halbleiterscheibe, beträchtlich erhöhen.

2) Maßstabsfehler, d. h. Abweichungen vom theoretischen Abbildungsmaßstab des Abbildungssystems (bei photolithographischen Verfahren oft 1 : 1).

3) Weitere Fehler, wie
Rotation, d. h. globale Drehungen,
Translation, d. h. globale Verschiebungen,
Orthogonalität, d. h. Winkelverzerrungen.

Alle diese Fehler, die insgesamt die Verzeichnung darstellen, sollten für jeden Punkt des gesamten Gesichtsfeldes einzeln bekannt sein. Im Stand der Technik sind jedoch keine Verfahren bekannt, mit denen diese Messung mit erträglichem Aufwand und der erforderlichen Genauigkeit durchzuführen wäre.

Das Prüfverfahren, das heute am häufigsten angewendet wird, besteht darin, ein bestimmtes Prüfmuster, z. B. Nonienraster, durch das zu prüfende System abbilden zu lassen und das Abbild punktweise auszumessen, z. B. auf mikroskopischem Weg, um Verzeichnungsfehler festzustellen. Dieses Verfahren ist jedoch sehr zeitraubend, so daß nur einige wenige Punkte (z. B. 9) des Gesichtsfeldes ausgemessen werden können. Außerdem hängt die erzielbare Genauigkeit in starkem Maß von der Übung und der Sorgfalt der Bedienungsperson ab (es handelt sich um Einzelpunkte, eine automatische Mitteilung über größere Ortsbereiche findet nicht statt).

Neben der Ausmessung von Einzelpunkten könnten auch Verfahren Anwendung finden, mit denen größere Bereiche des Gesichtsfeldes parallel auf Verzeichnungsfehler geprüft werden.

Dafür können Testmuster eingesetzt werden, die vom zu prüfenden System abgebildet und anschließend auf Abweichungen geprüft werden. Bei periodisch strukturierten Testmustern kann die Prüfung der Kopie auf interferometrischem Weg erfolgen (siehe z. B. die gleichzeitig eingereichte europäische Patentanmeldung EP-A-0 040 700).

Ein weiteres bekanntes Vergleichsverfahren beruht auf der Ausnutzung des Moiré-Effektes, der entsteht, wenn das periodisch strukturierte Original mit der Kopie zur Überlagerung gebracht wird. Bei Verzerrungen der Kopie durch Verzeichnungsfehler haben die entstehenden Moiré-Streifen eine andere Lage als bei der Überlagerung zweier idealer periodischer Strukturen. Einzelheiten der Moiré-Technik sind beispielsweise in dem Artikel »Applied Optics«, Band 11, 1972, Seite 2455, beschrieben.

Alle bisher bekannten parallelen Meßverfahren sind in ihrer Empfindlichkeit auf den Wert von ungefähr $\geq 0,5$ µm beschränkt. Die interferometrischen Verfahren weisen außerdem den Nachteil auf, daß bei ihnen prinzipiell keine Aussage über die oben beschriebenen Translations- und Rotations-Fehler möglich ist.

Die Moiré-Verfahren sind dagegen prinzipiell in der Lage, alle Verzeichnungsfehler zu erfassen. Ihre Empfindlichkeit liegt jedoch in der Größenordnung der verwendeten Gitterperiode (ungefähr 0,1 Gitterperioden). Das bei der Prüfung eines optischen Systems verwendete Gitter kann nun höchstens so fein gemacht werden, daß es bei der Abbildung durch das zu prüfende System noch als Gitter aufgelöst wird.

Die kleinsten Strukturen, die. von heute im Einsatz befindlichen photolithographischen Kopiermaschinen noch aufgelöst werden, liegen bei 2 μm, so daß nur Gitter verwendet werden können, deren Gitterkonstante größer oder gleich 4 μm ist. Die mit solchen Gittern erreichbare Empfindlichkeit des Moiré-metrischen Verfahrens ist also auf rund 0,5 μm begrenzt und entspricht somit nicht den oben erwähnten Anforderungen.

Die vorliegende Erfindung stellt sich daher die Aufgabe, ein Moiré-metrisches Verfahren zur Prüfung der Abbildungseigenschaften optischer Abbildungssysteme anzugeben, das eine parallele Untersuchung großer Gesichtsfelder mit einer besseren Genauigkeit als 0,5 Mikrometer gestattet.

Diese Aufgabe wird durch die im Anspruch 1 gekennzeichnete Erfindung gelöst; besondere Ausgestaltungen des Verfahrens sind in den Unteransprüchen gekennzeichnet.

Die Erfindung schlägt dazu ein aus drei Schritten bestehendes Verfahren vor, bei dem in einem ersten Schritt ein Originalgitter als Kontaktkopie auf ein Substrat übertragen wird und in einem zweiten Schritt eine zweite Kopie des Originalgitters vom zu prüfenden Abbildungssystem auf dem um einen geringen Winkel gedrehte Substrat erzeugt wird. Die leicht gegeneinander verdrehten Gitterkopien auf dem Substrat erzeugen Moiré-Streifen, deren Abweichung von der Ideallage Aussagen über die Abbildungsfehler ermöglicht. Zur Auswertung des Moiré-Musters mit der erforderlichen Genauigkeit wird das Muster in einem dritten Schritt beleuchtet und die entstehenden Interferenzmuster in einer hohen Beugungsordnung beobachtet.

Mit diesem Verfahren können sämtliche Verzeichnungsfehler über das gesamte Gesichtsfeld mit einer Auflösung von ungefähr 0,1 Mikrometer gemessen werden. Der technische Aufwand für das Verfahren ist äußerst gering, die Anforderungen an die Qualität der optischen und mechanischen Bauelemente der Auswertevorrichtung sind leicht zu erfüllen. Die zur Prüfung erforderliche Vorrichtung ist leicht und transportabel und kann beispielsweise zur täglichen Prüfung der photolithographischen Systeme in einer Halbleiterfertigung verwendet werden. Die Auswertung der Moiré-Streifen ist einfach und kann entweder visuell oder durch optisch-elektronische Abtastung mit nachfolgender elektronischer Bildverarbeitung erfolgen. Das Moiré-metrische Verfahren kann auch neben interferometrischen Verfahren verwendet werden, die nur die lokale Verzeichnung und Maßstabsfehler messen können, für diese Parameter aber eine noch größere Genauigkeit erreichen (vgl. Parallelanmeldung EP-A-0 040 700).

Ausführungsbeispiele der Erfindung werden nun anhand von Zeichnungen näher erläutert. Es zeigt

Fig. 1 in den Teilfiguren A, B, C die Einzelschrit-te des Moiré-metrischen Verfahrens,

Fig. 2A das bei Überlagerung zweier Gitterstrukturen auf einem Substrat entstehende Moiré-Muster bei Beobachtung in erster Beugungsordnung,

Fig. 2B das Moiré-Muster nach Fig. 2A bei Beobachtung in dritter Beugungsordnung,

Fig. 3A einen vergrößerten Ausschnitt der Überlagerung zweier Gitterstrukturen auf einem Substrat,

Fig. 3B die Beugungsintensität verschiedener Beugungsordnungen als Funktion des Tastverhältnisses der Gitter,

Fig. 4 ein Beispiel der auf dem Substrat angebrachten Meßmarken zur Einstellung einer genau definierten Rotation zwischen den beiden Belichtungsschritten,

Fig. 5A, 5B, 5C Gitterfelder mit orthogonalen Teilgittern.

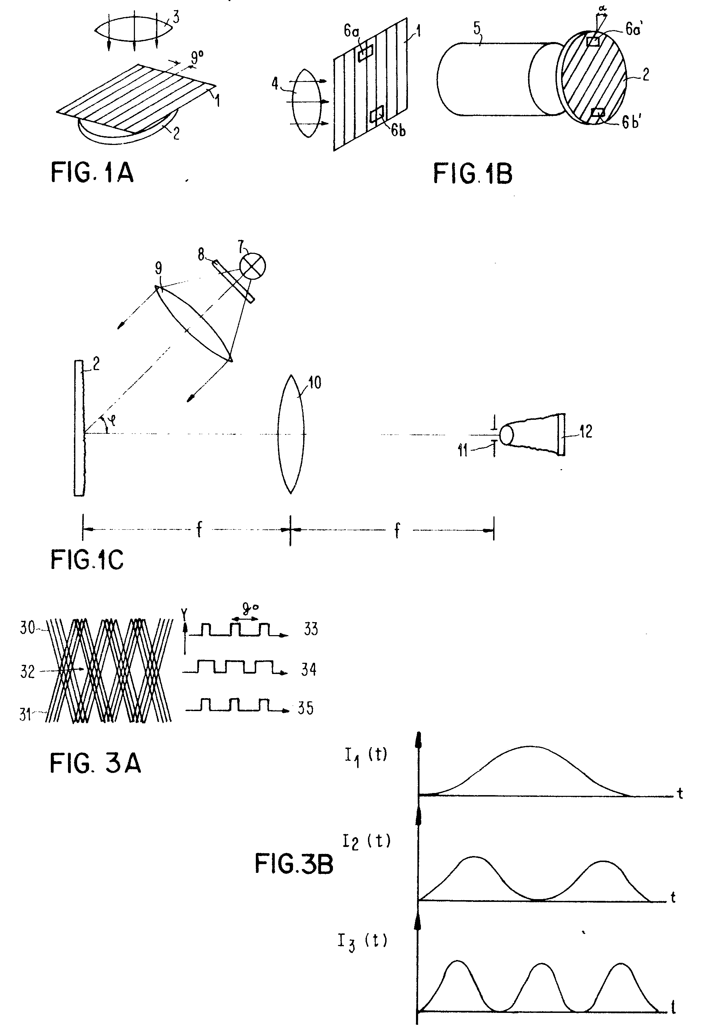

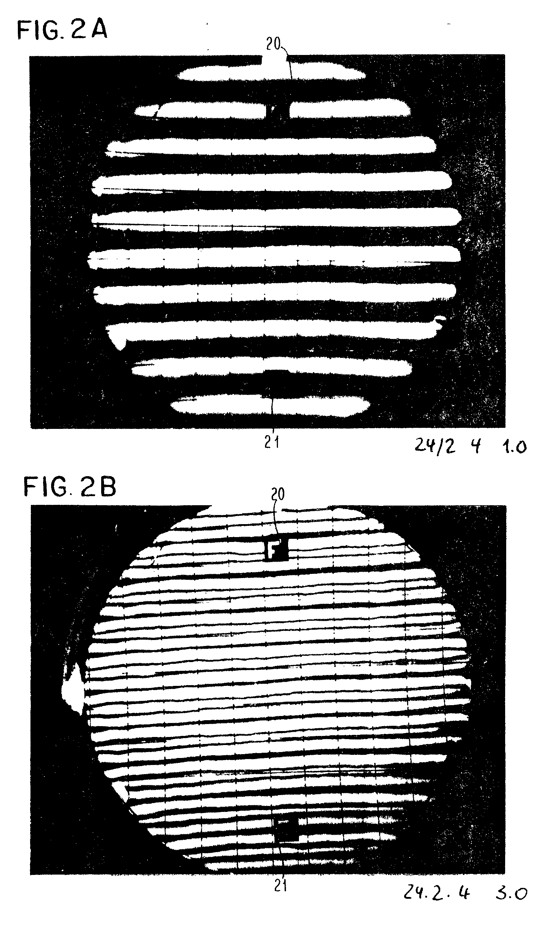

In den Teilfiguren A, B und C von Fig. 1 sind schematisch die drei Schritte zur Durchführung des Moiré-metrischen Prüfverfahrens für optische Abbildungssysteme dargestellt. Fig. 1A zeigt das Kontaktkopieren eines auf einem Substrat 2 liegenden Gittermusters 1 durch ein Lichtbündel 3. Das Gitter hat beispielsweise eine Gitterkonstante $g_0 = 4$ μm. Um Verzerrungen der Gitterform bei der Kontaktkopie klein zu halten, muß sowohl das Gitter als auch das Substrat sehr eben sein; beide werden deshalb aus Quarz hergestellt und weisen eine Ebenheit von $\lambda/5$ bzw. $\lambda/4$ auf. Die Gitterkopie auf dem Substrat besteht aus einem entsprechend geformten Chrom-Muster, das mit den üblichen photolithographischen Methoden definiert wird.

Bei dem eben beschriebenen Vorgehen liegt die Verzeichnung der Gitterkopie im Bereich von 0,1 Mikrometer. Wenn diese Verzeichnungen bei hochgenauen Messungen stören, kann die Kontaktkopie mit dem in der Parallelanmeldung EP-A-0 040 700 beschriebenen interferometrischen Verfahren ausgemessen und der Fehler nachträglich korrigiert werden.

In dem zweiten Verfahrensschritt, der in Fig. 1B dargestellt ist, wird das von einem Lichtbündel 4 beleuchtete identische Gitter 1 durch das zu prüfende optische Abbildungssystem 5 auf dasselbe Substrat 2 abgebildet, auf dem sich schon die Kontaktkopie des Gitters befindet. Das optische Abbildungssystem ist beispielsweise eine photolithographische Kopiermaschine. Nach der Abbildung wird die zweite Gitterkopie auf dem Substrat 2 mit den üblichen photolithographischen Methoden als Chrom-Muster entwickelt.

Für das Moiré-metrische Verfahren muß die nach Fig. 1B erzeugte Gitterkopie um einen bestimmten Winkel $\alpha$ gegenüber der nach Schritt 1 aufgebrachten Kontaktkopie gedreht sein. Dieser Winkel $\alpha$ ist in Fig. 1B als Winkel gegen die Senkrechte dargestellt, da das Originalgitter 1 in vertikaler Orientierung gezeichnet ist. Zur genauen Einstellung der Relativlage von Gitter 1 und Substrat 2 im Abbildungsschritt nach Fig. 1B sind auf dem

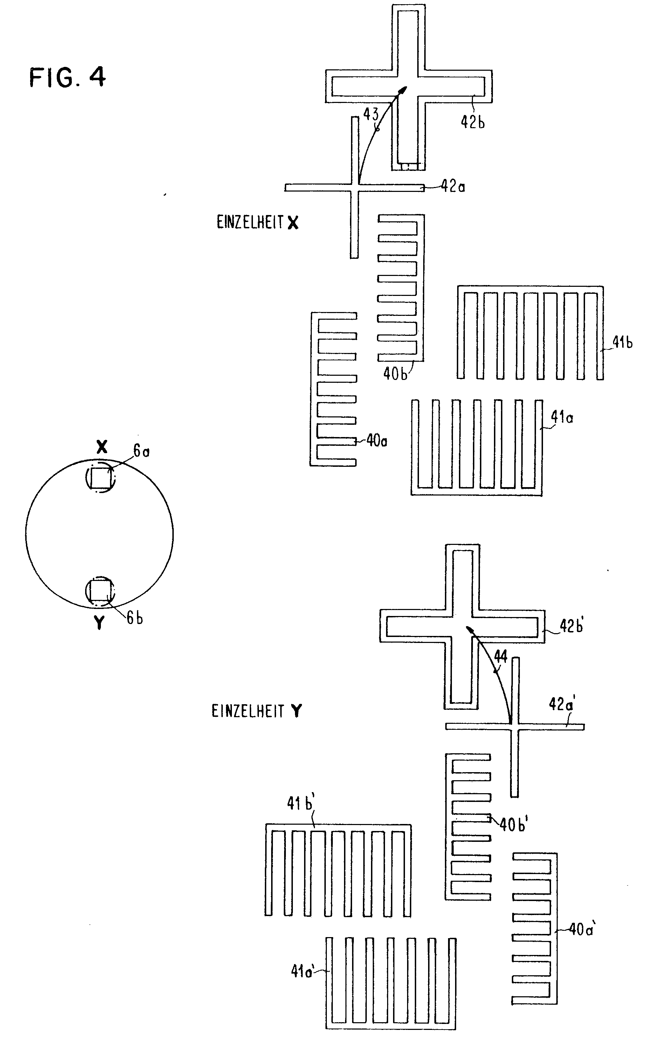

Gitter Meßmarken 6a, 6b angebracht, die bei Ausrichtung mit entsprechenden Marken 6a', 6b' auf der Kontaktkopie eine Drehung des Substrats mit einer Genauigkeit von 0,1 µm ermöglichen. Ein Beispiel für derartige Meßmarken wird später anhand von Fig. 4 erläutert. Die Größenordnung des Winkels $\alpha$ liegt bei ~1 Bogenminute.

Durch die Doppelbelichtung des Substrats 2 entsteht auf diesem ein kreuzgitterähnliches Muster; ein Ausschnitt davon ist in Fig. 3A gezeigt. Die Chrom-Stege 30 des einen Musters und die Stege 31 des zweiten, leicht dagegen gedrehten Musters schließen rautenförmige freie Bereiche 32 ein. Die Schnittpunkte der beiden überlagerten Gitter rufen Moiré-Streifen hervor, deren Lage unter der Annahme idealer Gitter genau berechnet werden kann. Weist das zu prüfende Abbildungssystem Verzeichnung auf, so stimmt die Lage der beobachteten Moiré-Streifen nicht mit der berechneten Lage überein; die Abweichung stellt dann ein Maß für die Abbildungsfehler dar.

Die verschiedenen Verzeichnungsfehler wirken sich in bestimmter Weise auf das Moiré-Muster aus:

Eine Verschiebung der beiden Gitter senkrecht zu den Gitterlinien bewirkt eine Translation der Moiré-Streifen. Eine Rotation des einen Gitters gegen das andere bewirkt eine Änderung der Moiré-Periode und ein Fehler des Abbildungsmaßstabs bewirkt eine Drehung der Moiré-Streifen.

Die Empfindlichkeit und die Genauigkeit des Verfahrens hängen davon ab, wie genau die Lage der Moiré-Streifen bzw. deren Abweichung von der Ideallage bestimmt werden können. Bei der verwendeten Gitterperiode von 4 Mikrometer und einer gewünschten Empfindlichkeit von 0,1 Mikrometer muß die Lage der Moiré-Streifen auf $1/40$ ihrer Periode bestimmt werden. Diese Genauigkeit ist nicht erreichbar, wenn die Moiré-Streifen direkt beobachtet werden, da sie sich als relativ breite und unscharf begrenzte Streifen darstellen (vergleiche Fig. 2A).

Zur genauen Auswertung schlägt die Erfindung deshalb vor, das Kreuzgittermuster der überlagerten Gitter mit einer annähernd ebenen, vorzugsweise monochromatischen Lichtwelle zu beleuchten und unter den entstehenden Beugungsordnungen eine hohe Beugungsordnung zu beobachten. Dadurch werden die Moiré-Streifen sehr eng und können mit großer Genauigkeit vermessen werden (Fig. 2B).

Die Auswertevorrichtung für das Moiré-Muster ist in Fig. 1C dargestellt. Eine Lichtquelle 7 mit einem nachgeschalteten monochromatischen Filter 8 und ein Kondensator 9 erzeugen ein Lichtbündel, das unter einem Winkel $\varphi$ auf das Substrat 2 einfällt, der die Bedingung erfüllt:

$$\sin \varphi = n \cdot \lambda/g_0 \, .$$

Bei dieser Anordnung kann somit die n-te Beugungsordnung senkrecht zum Substrat 2 beobachtet werden. Das gebeugte Licht wird an einer im Abstand ihrer Brennweite f angeordneten Linse 10 auf eine Aufzeichnungsvorrichtung 12 mit vorgeschalteter Blende 11 gegeben, die wiederum im Abstand f hinter der Linse 10 angeordnet sind. Die Aufzeichnungsvorrichtung 12 kann entweder eine Photokamera oder ein photoelektrisches Aufzeichnungsgerät sein.

Die Fig. 2A, 2B zeigen dasselbe Moiré-Muster bei Beobachtung in verschiedenen Beugungsordnungen. Die Aufnahmen stellen das scheibenförmige Substrat dar (dessen Durchmesser dem zu prüfenden Gesichtsfeld entspricht). Auf dem Substrat sind Justiermarken 20, 21 (entsprechend 6a', 6b' in Fig. 1B) sichtbar und außerdem ein Kreuzgitter, das ebenfalls photolithographisch auf das Substrat aufgebracht wurde. Dieses Gitter dient als Referenzgitter zur genauen Bestimmung der Lage der Moiré-Streifen, die sich in Fig. 2A als relativ breite dunkle Bänder zwischen den Kreuzgitterlinien darstellen.

Wird dasselbe Substrat in hoher Beugungsordnung beobachtet, so ergibt sich das in Fig. 2B dargestellte Bild. Die breiten Moiré-Bänder sind in mehrere scharfe Linien aufgespalten, die unterschiedliche Intensität aufweisen. Aus der Lage dieser scharfen Linien im Vergleich zum Referenzgitter lassen sich nun die Abbildungsfehler mit der gewünschten großen Genauigkeit ermitteln. Besonders einfach wird die Auswertung, wenn die Referenzlinien dort auf das Substrat aufgebracht werden, wo bei idealer Abbildung die idealen Moiré-Streifen liegen sollten.

Die Aufspaltung der Moiré-Linien bei Beobachtung in hoher Beugungsordnung und die unterschiedliche Intensität dieser Moiré-Linien läßt sich anhand der Darstellung von Fig. 3 erläutern.

Werden waagerechte Schnitte durch das aus den beiden überlagerten Gittern entstandene Kreuzgitter gelegt, so entstehen periodische Schnittfiguren mit gleicher Periodizität (der Gitterkonstanten $g_0$), aber verschiedenen Tastverhältnissen (darunter wird das Verhältnis der Breite des undurchsichtigen Chrom-Stegs zur Gitterkonstanten $g_0$ verstanden). Das Tastverhältnis ändert sich periodisch, wenn auf der Substratfläche in Y-Richtung fortgeschritten wird. Drei Beispiele für Horizontalschnitte (in X-Richtung) mit verschiedenem Tastverhältnis sind in Fig. 2B bei den Bezugszeichen 33, 34, 35 gezeigt.

Die Intensität $I_n$ in n-ter Beugungsordnung eines Gitters mit dem Tastverhältnis t läßt sich folgendermaßen ausdrücken:

$$I_n = \left(\frac{1}{n\pi}\right)^2 \sin^2 \pi n t \, .$$

In einer bestimmten Beugungsordnung wird somit die Intensität bei einem periodisch sich ändernden Tastverhältnis moduliert. Die Zahl der Moiré-Streifen wird also bei Beobachtung in der n-ten Beugungsordnung um den Faktor n größer und ihre Breite um den Faktor n geringer. Dies entspricht einer Empfindlichkeitssteigerung für die Auswertung um den Faktor n in gleicher Weise, als wäre die Gitterkonstante der verwendeten Gitter um den Faktor n verringert worden (derartig enge Gitter könnten aber nach dem oben Gesagten vom abbildenden System nicht mehr aufgelöst werden).

In Fig. 3B ist schematisch die Intensität $I_n$ der Beugung als Funktion des Tastverhältnisses für verschiedene Beugungsordnungen (1, 2, 3) dargestellt. Die Aufspaltung der Linien bei hoher Beugungsordnung entspricht der Verschärfung der Linien in Fig. 2B.

Die hohe Empfindlichkeit des hier beschriebenen Verfahrens beruht im wesentlichen auf zwei Maßnahmen:

- der Beobachtung in hoher Beugungsordnung, d. h. höhere Ablesegenauigkeit,
- der Beobachtung zweier überlagerter Gitter, die beide in derselben Ebene (der Substratebene liegen.

Ohne die zweite Maßnahme müßte das Originalgitter (auf einem Substrat) mit der Gitterkopie (auf einem anderen Substrat) räumlich getrennt übereinander angeordnet werden, um Moiré-Muster zu erzeugen. Dadurch ergäben sich aber eine Reihe unkontrollierbarer Fehlereinflüsse (z. B. Dickenschwankungen der Substrate, Abstandsschwankungen etc.), die zu größeren Verzerrungen des Moiré-Musters Anlaß geben als die Fehler des untersuchten Abbildungssystems.

Fig. 4 zeigt ein Beispiel für Justiermarken, die zur genau definierten Drehung der beiden Gitter auf dem Substrat verwendet werden können. Jede Marke besteht aus zwei Paaren (Nonienpaare) senkrecht zueinander angeordneter kammartiger Meßstrichfolgen 40a, 40b und 41a, 41b und zwei Kreuzen 42a, 42b, deren Schenkel parallel zu den Kammrichtungen verlaufen. Kamm- und Kreuzpaare sind schräg gegeneinander versetzt. Sie können durch eine entsprechende Relativverschiebung von Originalgitter und Substrat zur Deckung gebracht werden; zur Erhöhung der Genauigkeit werden die Kammelemente so justiert, daß Kamm auf Lücke fällt. Zur Erzeugung der gewünschten Rotation wird das bei senkrecht stehenden Gitterstegen des Originalgitters oben liegende Justiermuster 6a durch eine Relativverschiebung in Richtung der Gitterstege und anschließend nach rechts senkrecht zu den Gitterstegen zur Deckung gebracht (Bewegung in Richtung des Pfeils 43), das unten liegende Justiermuster durch eine entsprechende Bewegung in Richtung der Gitterstege und eine Bewegung nach links senkrecht zu den Gitterstegen (Bewegung in Richtung des Pfeils 44). Mit diesen Justiermarken kann die Drehung auf 0,1 μm eingestellt werden.

Bei dem oben beschriebenen Verfahren werden die horizontale und die vertikale Komponente der Verzeichnung mit Hilfe zweier Messungen mit verschiedenen Substraten bestimmt. Deshalb kann der Orthogonalitätsfehler nicht direkt festgestellt werden.

Dieser Fehler läßt sich jedoch durch folgende Weiterbildung der Erfindung in einem Meßvorgang ermitteln:

Anstelle eines einzigen linearen Originalgitters wird ein Gitterfeld verwendet, dessen lineare Teilgitter senkrecht zueinander orientiert sind.

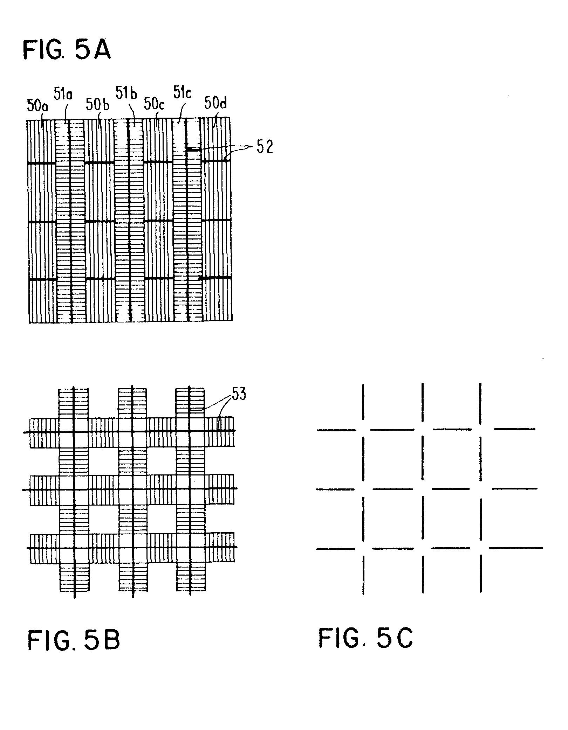

Fig. 5A zeigt ein Beispiel für ein derartiges Gitterfeld mit streifenförmiger Anordnung der Teilgitter (50a, b, c ... senkrechte Orientierung, 51a, b, c horizontale Orientierung). Die Breite der Teilgitter ist so gewählt, daß sie vorzugsweise der Hälfte des Abstandes der Moiré-Streifen entspricht. Die erwarteten Moiré-Streifen sind in Fig. 5A als dicke Linien (52) angedeutet.

Die streifenförmige Anordnung der Teilgitter nach Fig. 5A hat noch den Nachteil, daß die horizontalen Moiré-Streifen große Lücken aufweisen. In einem anderen Gitterfeld nach Fig. 5B läßt sich dieser Nachteil vermeiden.

Die streifenförmigen Teilgitter werden nun in solche Bereiche gelegt, in denen Moiré-Streifen erster Ordnung erwartet werden. Die Breite der Teilgitter wird entsprechend der maximal möglichen Verzerrung gewählt.

In Fig. 5B sind die erwarteten Moiré-Streifen schwarz dick eingezeichnet (53) und der Bereich ihrer möglichen Abweichung gestrichelt.

Wird nun das Gitter so ausgelegt, daß die Teilgitter in die so ermittelten Bereiche (Fig. 5B) fallen, erhält man Moiré-Streifen mit nur geringen Unterbrechungen (Fig. 5C). Die Begrenzung des Gitters auf einen schmalen Bereich hat zusätzlich den Vorteil, daß in höheren Beugungsordnungen die störenden Zwischenstreifen (Fig. 2B) entfallen, was die automatische Auswertung erleichtert.

Für die Sichtbarmachung des Moiré-Systems muß man das Substrat schräg aus zwei zueinander senkrechten Richtungen beleuchten, mit je einer Anordnung, wie sie in Fig. 1C skizziert ist.

**Patentansprüche**

1. Verfahren zur Moiré-metrischen Prüfung der Abbildungseigenschaften optischer Abbildungssysteme, dadurch gekennzeichnet, daß in einem ersten Schritt (Fig. 1A) durch Kontaktbelichtung eine erste Kopie einer linearen optischen Gitterstruktur (1) auf einem Substrat (2) erzeugt wird, daß in einem zweiten Schritt (Fig. 1B) auf demselben Substrat (2) eine zweite Kopie der optischen Gitterstruktur (1) durch das zu prüfende Abbildungssystem (5) erzeugt wird, wobei die zweite Gitterstruktur um einen kleinen Winkel ($\alpha$) gegen die erste verdreht ist, und daß in einem dritten Schritt (Fig. 1C) die überlagerten Gitterstrukturen beleuchtet und das entstehende Moiré-Muster in einer hohen Beugungsordnung (n > 1) beobachtet wird.

2. Moiré-Verfahren nach Anspruch 1, dadurch gekennzeichnet, daß die Gitterkopien als Chromstrukturen auf sehr ebenen Substraten (Glas, Quarz) photolithographisch erzeugt werden.

3. Verfahren nach Anspruch 1 oder 2, dadurch gekennzeichnet, daß die Gitterkonstante (g) der verwendeten Gitterstruktur im Bereich einiger Mikrometer liegt.

4. Verfahren nach einem der Ansprüche 1 bis 3, dadurch gekennzeichnet, daß auf dem Substrat Referenzlinien erzeugt werden, die vorzugsweise der Lage von Moiré-Mustern idealer Gitter und idealer Abbildungssysteme entsprechen.

5. Verfahren nach einem der Ansprüche 1 bis 4, dadurch gekennzeichnet, daß zur Einstellung der relativen Drehung beider Gitter Feinmeßmarken mit Nonienstruktur (Fig. 4) auf Originalgitter und Substrat angebracht werden.

6. Verfahren nach einem der Ansprüche 1 bis 5, dadurch gekennzeichnet, daß die zur Beleuchtung der überlagerten Gitterstrukturen verwendete Lichtwelle unter einem Einfallswinkel ($\varphi$) auftrifft, der dem Beugungswinkel der beobachteten Beugungsordnung entspricht.

7. Verfahren nach Anspruch 6, dadurch gekennzeichnet, daß zur Aufnahme des Moiré-Musters in hoher Beugungsordnung eine im Abstand ihrer Brennweite (f) vor dem Substrat angeordnete Abbildungsoptik (Linse 10) und eine photographische Aufzeichnungsvorrichtung (12) vorgesehen ist, deren Abstand von der Abbildungsoptik ebenfalls der Brennweite (f) entspricht.

8. Verfahren nach einem der Ansprüche 1 bis 7, dadurch gekennzeichnet, daß ein Gitterfeld (Fig. 5) verwendet wird, dessen lineare Teilgitter (50, 51) senkrecht zueinander orientiert sind.

9. Verfahren nach Anspruch 8, dadurch gekennzeichnet, daß die Teilgitter streifenförmig ausgebildet sind.

10. Verfahren nach Anspruch 9, dadurch gekennzeichnet, daß die Teilgitter in Bereichen des Substrats erzeugt werden, in denen Moiré-Streifen zu erwarten sind und daß die Breite der Teilgitter der erwarteten maximalen Auslenkung der Moiré-Linien entspricht.

## Claims

1. Method of moiré-metrical testing of the imaging characteristics of optical imaging systems, characterized in that in a first step (Fig. 1A) a first copy of a linear optical grating structure (1) is generated through contact exposure on a substrate (2), that in a second step (Fig. 1B) on the same substrate (2) a second copy of the optical grating structure (1) is generated by the imaging system (5) to be tested, the second grating structure being rotated relative to the first one by a small angle ($\alpha$), and that in a third step (Fig. 1C) the superimposed grating structures are illuminated and the appearing moiré structure is observed in a high order of diffraction (n > 1).

2. Moiré method as claimed in claim 1, characterized in that the grating copies are generated photolithographically as chromium structures on highly flat substrates (glass, quartz).

3. Method as claimed in claim 1 or 2, characterized in that the grating constant (g) of the grating structure used is in the range of some micrometers.

4. Method as claimed in any one of claims 1 to 3, characterized in that reference lines are generated on the substrate which preferably correspond to the position of moiré patterns of ideal gratings and ideal imaging systems.

5. Method as claimed in any one of claims 1 to 4, characterized in that for setting the relative rotation of both gratings precision measuring marks with vernier structure (Fig. 4) are provided on original grating and substrate.

6. Method as claimed in any one of claims 1 to 5, characterized in that the light wave used for illuminating the superimposed grating structures impinges at an angle of incidence ($\varphi$) which corresponds to the angle of diffraction of the observed order of diffraction.

7. Method as claimed in claim 6, characterized in that for recording the moiré pattern in a high order of diffraction, an imaging element (lens 10) arranged before the substrate at the distance of its focal length (f), and a photographic recording device (12) are provided, the distance of the latter from the imaging object equally corresponding to the focal length (f).

8. Method as claimed in any one of claims 1 to 7, characterized in that a grating field (Fig. 5) is used whose linear partial gratings (50, 51) are oriented vertically to each other.

9. Method as claimed in claim 8, characterized in that the partial gratings are arranged in stripes.

10. Method as claimed in claim 9, characterized in that the partial gratings are generated in substrate areas where moiré stripes are to be expected, and that the width of the partial gratings corresponds to the expected maximum deviation of the moiré lines.

## Revendications

1. Procédé pour contrôler les propriétés de formation d'image de systèmes optiques utilisant des franges de moiré, caractérisé, en ce que, dans une première étape (figure 1A), une première image d'un réseau linéaire optique (1) est produite par un éclairage de contact sur un substrat (2), que, dans une deuxième étape (figure 1B), une deuxième image optique est produite par le système optique (5) à contrôler sur le même substrat (1), où ledit deuxième réseau a été entraîne en rotation d'un angle petit ($\alpha$) par rapport au premier réseau, que dans une troisième étape (figure 1C) lesdits réseaux superposés sont éclairés et que la configuration de moiré obtenue est analysée selon un ordre de diffraction élevé (n > 1).

2. Procédé utillisant des franges de moiré selon la revendication 1, caractérisé en ce que lesdites images de réseau sont produites sous la forme de structures en chrome sur des substrats très plats (verre, quartz) selon un procédé photolithographique.

3. Procédé selon la revendication 1 ou 2, caractérisé en ce que la constante de réseau (g) dudit réseau employé se situe dans une fourchette de quelques micromètres.

4. Procédé selon une des revendications 1 à 3, caractérisé en ce que les lignes de référence réralisées sur ledit substrat correspondent de préférence à la position de configuration de moiré de réseaux et de systèmes optiques idéaux.

5. Procédé selon une des des revendications 1 à 4, caractérisé en ce qu'afin d'ajuster les positions de rotation relatives desdits réseaux, des marques de mesure de haute précision à vernier (figure 4) sont agencées sur le réseau original et sur le substrat.

6. Procédé selon une des revendications 1 à 5, caractérisé en ce que l'impact de l'onde lumineuse utillisée pour éclairer lesdits réseaux superposés présente un angle d'incident ($\Phi$) qui correspond à l'angle de diffraction de l'ordre diffracté observé.

7. Procédé selon la revendication 6, caractérisé en ce qu'il est prévu afin de photographier la configuration de moiré avec un ordre de diffraction élevé, un système optique (lentille 10) disposé devant ledit substrat à une distance égale à sa distance focale ainsi qu'un dispositif d'enregistrement photographique (12) qui est séparé dudit système optique par une distance qui est aussi égale à la distance focale (f).

8. Procédé selon une des revendications 1 à 7, caractérisé en ce qu'on utilise un champ réticulaire (figure 5) dont les réseaux linéaires partiels (50, 51) sont disposés perpendiculairement l'un par rapport à l'autre.

9. Procédé selon la revendication 8, caractérisé en ce que les réseaux partiels sont conçus en forme de bandes.

10. Procédé selon la revendication 9, caractérisé en ce que lesdits réseaux partiels sont produits dans les régions du substrat où sont prévues les franges de moiré, et que la largeur desdits réseaux partiels est égale à la déviation maximale prévue desdites franges de moiré.

FIG.1A

FIG.1B

FIG.1C

FIG. 3A

FIG.3B

$I_1(t)$

$I_2(t)$

$I_3(t)$

9

FIG. 2A

24/2 4 1.0

FIG. 2B

24.2.4 3.0

FIG. 4

EINZELHEIT X

EINZELHEIT Y

## FIG. 5A

## FIG. 5B

## FIG. 5C